# EUROPEAN PATENT SPECIFICATION

(11) **EP 0 473 865 B1**
(45) Date of publication and mention of the grant of the patent: **03.04.1996**
(21) Application number: 91100028.9
(22) Date of filing: 02.01.1991
(51) Int. Cl.: B23Q 7/00

(54) **Conveyor unit**
Fördervorrichtung
Unité de manutention

(30) Priority: 05.09.1990 JP 93665/90
(43) Date of publication of application: 11.03.1992
(73) Proprietor: KABUSHIKI KAISHA KYOEI SEIKO, Higashiosaka-shi, Osaka-fu (JP)
(72) Inventor: Takeda, Takachiho c/o K.K. Kyoei Seiko, Osaka-fu (JP)
(74) Representative: Reinhard - Skuhra - Weise & Partner

(56) References cited:
- DE-A- 3 212 793
- FR-A- 1 512 551

## Description

The present invention relates generally to conveyor units, and more particularly to conveyor units of the type used for conveying press dies, for example. Such type of conveyors include, for example, the so-called free ball bearing.

### PRIOR ART

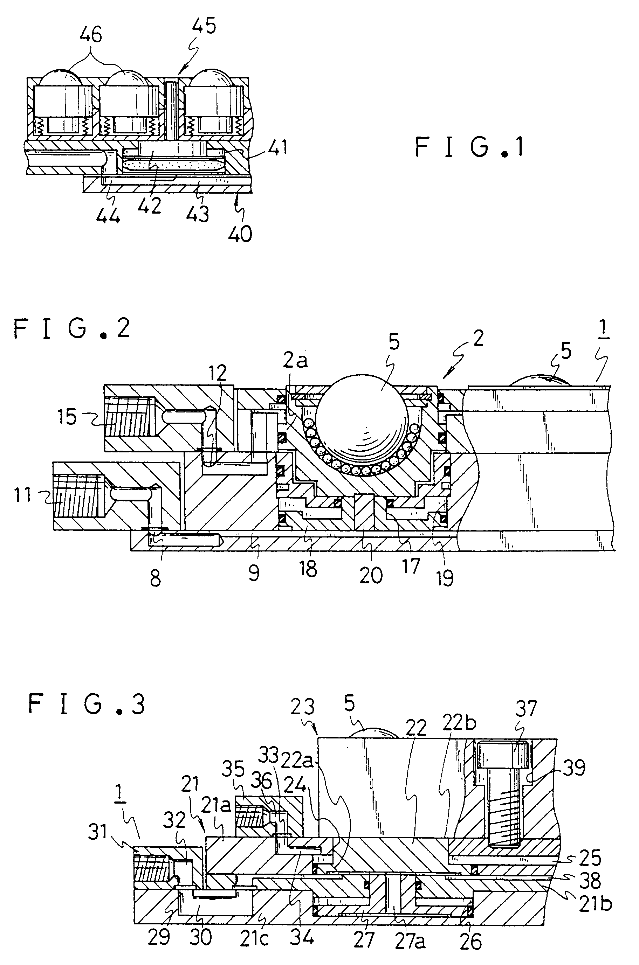

A prior art unit includes a bar-shaped base member 40 having a plurality of cylinder bores 41 bored in the top surface along a longitudinal direction thereof, as shown in Fig. 1. Pistons 42 are mounted within the cylinder bores 41 so that they can protrude out of and retract into the cylinder bores. The cylinder bores 41 are communicated with one another through passages 43. In use, compressed air can be supplied by means of a compressor, for example, to a passage 44 which is communicated with one of the cylinder bores 41 which is located at one end of the base member 40 so that the pistons 42 can be kept at a raised position.

Further, a conveyor unit 45, e.g. a so-called free ball bearing unit, having a plurality of axially arranged, upwardly protruding rollable ball members 46, is mounted on the vertically actuating pistons 42 on the base member 40.

This prior art has an advantage that it can be manufactured at low costs and can be inspected and maintained very easily since the unit itself may be of a simple structure.

The above-mentioned prior art conveyor unit, however, has a serious disadvantage. That is, it has no particular means for lowering the unit body 45. In fact, the compressor is opened to exhaust the cylinder bores 41 in the base member 40 of the compressed air. The compressed air is thus exhausted by virtue of the weight of the unit body 45. In addition, because the base member 40 is of an elongated structure and, as a result, the descending motion is very slow, it takes too long a time for the unit 5 to descend completely, hindering a sequence of operations of conveying workpieces from being smoothly done and thus greatly reducing the working effiency.
DE-A-32 12 793 discloses a conveyor unit according to the preamble of claim 1. Figs. 6 and 7 thereof show a first embodiment of the conveyor unit comprising individually controlled supports for rolling members. Figs. 9 to 12 of this document show a bar-like unit body with integrated supports, wherein the support body is raised. However, both embodiments comprise only ports for raising supports and, therefore, the disadvantages, mentioned above with regard to Fig. 1 are also valid.

### PROBLEMS TO BE SOLVED BY THE INVENTION

Therefore, it is an object of the present invention to provide an improved conveyor unit having an increased lowering velocity.

This object is achieved by the features of claim 1. Further advantageous embodiments are specified in subclaims 2 to 7.

Advantageously, with a conveyor unit according to the invention the descending velocity is not only dependent on the weight of the support and bore member, but is increased by introducing fluid through a lowering inlet port.

The invention will now be described, by way of an example, with reference to the accompanying drawings, in which:
- Fig. 1: is a sectional view showing a prior art unit;
- Fig. 2: is a sectional view showing a first embodiment of the unit; and
- Fig. 3: is a sectional view of another embodiment.

In Fig. 2 a conveyor unit 1 includes pistons 18 having a projection 17 provided at its center on the top thereof. The pistons 18 are mounted in cylinder bores 19 at a lower position, and are connected to the lower surface of the supports 2 through pins 20 protruding from the top of said projections 17.

To lift the supports 2, compressed air is introduced into the cylinder bores 19 through an inlet port 11 and a conduction port 8, thereby to press the pistons 18 from below. Meanwhile, in order to lower the supports 2, compressed air is introduced into the cylinder bores 19 through an other inlet 15 and a port 12, whereby the top surface of a flange 2a of each support 2 is pressed downward and the supports 2 are thereby lowered.

The above-described embodiment comprises a unit body 1 which includes rollable member supports 2 integral therewith. Another embodiment will next be described which comprises a base as raising and lowering means, and a separate bearing unit provided with rollable members.

In Fig. 3, a base 21 comprises a top lid 21a, a body member 21b and a bottom plate 21c, respectively having a predetermined length. These members 21a, 21b and 21c are laid on one another to form a laminar structure, and are connected together by means of bolts (not shown), for example. Pistons 22, used to raise and lower a conveyor or support 23 provided with a plurality of rollable main balls 5, are vertically slidably mounted in first cylinder chambers 24 arranged side by side along a longitudinal direction in an upper portion of the base 21. Each piston 22 has a flange 22a provided around its lower portion, and its top surface 22b lies substantially level with the top surface of the top lid 21a. Reference numerals 25 and 38 designate passages interconnecting adjacent first cylinders 24, which passages are used for lowering and raising the pistons 22, respectively.

Under the first cylinder chambers 24, a plurality of second communicating cylinder chambers 26 are arranged side by side along a longitudinal direction in a lower portion of the base 21. An auxiliary piston 27 is mounted vertically slidably in each cylinder chamber 26, which piston 27 has a through hole 27a formed substantially at its central portion. An inlet port 29 is formed in the top surface of the bottom plate 21c of the base 21 at its one end, which port 29 is connected to the lower ends of the first cylinder chambers 24 through a communication passage 30. A lower attachment 31 is provided with a conduction passage 32 which communicates with the inlet port 29 of said bottom plate 21c. A compressor, for example, may be connected to the conduction passage 32 to introduce compressed air into the first cylinder bores 24 through the communication passage 30 in the base 21.

An inlet port 33 is formed in the top surface of the top lid 21a of the base 21 at one end, which port 33 is formed to allow compressed air to be supplied to press on the top surface of the flanges 22a of the pistons 22 through a communication passage 34 and first cylinder bores 24. An upper attachment 35, provided with an introduction passage 36 communicating with the inlet port 33, is mounted on the top surface of the top lid 21a of the base 21 at one end by suitable means such as bolts. The unit body 23 is mounted to the top lid 21a of the base 21 by means of bolts 37 extending through bores 39 provided at predetermined positions between the rollable members 5.

In this embodiment, compressed air introduced through the introduction passage 32 in the lower attachment 31 will flow into a lower portion of the pistons 22, respectively, via the inlet port 29 and communication passages 30 and 38. Each lifting piston 22 mounted in the first cylinder bore 24 will thereby be raised, and compressed air is allowed to flow into the second cylinder chambers 26 via the through holes 27a in the auxiliary pistons 27, thereby to lift the auxiliary pistons 27 to support the lifting pistons 22. The unit body 23 will then be pressed upward by the lifting pistons 22, and kept at an elevated position.

In this embodiment, since bolts 37 interconnecting the support 23 and the base 21 will serve as guides for the support 23 as it is raised and lowered, an advantage is obtained in that the support 23 will be smoothly raised or lowered without run-out.

The lifted workpiece is movable on the main balls 5 on the support 23 in any direction, and it can readily be moved to a desired position.

Subsequently, compressed air is drawn off through the inlet passage 32 in said lower attachment 31 and, simultaneously, compressed air is introduced through the other inlet passage 36 in the upper attachment 35. The newly introduced compressed air will flow through the other inlet ports 33 and communication passages 34 and 25 of the base 21 into an upper portion of the first cylinder bores 24, and will press the top surface of the flange 22a of each piston 22, causing the support 23 to descend. The auxiliary pistons 27 will also descend and the support 23 will smoothly and quickly descend together.

When two types of pistons are used, such as 22 and 27 in the third embodiment, an advantage may be achieved in that a relatively large load can be carried.

While in the above-described embodiments compressed air is used to raise and lower the supports 2 or the support 23, the present invention is not limited to this, but other fluids such as oil may alternatively be used.

Further, an explanation has been given with respect to an arrangement in which a support 23 in the form of a so-called free ball bearing unit is raised and lowered. The present invention is not limited to this, but it is also widely applicable to other unit bodies provided with rolling members comprising, for example, a needle roller bearing, irrespective of the details thereof, such as the length or shape of the support 23.

As will be clear from the foregoing, the present invention achieves a siginificant advantage that, because of the presence of a separate means for lowering rolling member supports or pistons, these rolling member supports or pistons can be lowered more smoothly and quickly as compared to those in prior art units which have no such lowering means.

The unit of the invention can thus greatly serve for operations such as conveying of workpieces.

In addition, the unit of the invention has another advantage that it can be manufactured at low costs and can be repaired or maintained easily because of its simple overall structure.

## Claims

1. A conveyor unit comprising:
a unit body (1);
one or more rolling member supports (2, 23) provided with rolling members (5), each support (2, 23) being slidably mounted in or on the unit body (1);
a raising inlet port (11, 31) through which a fluid can be introduced into cylinder bores (19, 24, 26) provided in the unit body (1) for raising each support (2, 23);
pistons (18, 22, 27) mounted in said cylinder bores (19; 24, 26) of the unit body (1) to be raised by the fluid introduced in said raising inlet port (11, 31), said pistons (18, 22, 27) having projections (17) acting on each support (2, 23); characterised by
a lowering inlet port (15; 33), through which a fluid can be introduced for lowering each support (2, 23).

2. The conveyor unit according to claim 1, wherein each support (2) comprises a lowering flange (2a).

3. The conveyor unit according to claim 1, wherein each piston (22) acting on said support (23) comprises a lowering flange (22a).

4. The conveyor unit according to claim 3, wherein two pistons (22, 27) are provided, the first piston (22) being mounted in a first cylinder bore (24) for raising and lowering said support (23), and the second piston (27) being mounted in a second cylinder bore (26) for additionally acting on said first piston (22) for raising thereof.

5. The conveyor unit according to claim 1, 3 or 4, comprising a base (21) formed of a top lid (21a), a body member (21b) and a bottom plate (21c), respectively having a predetermined length and forming a laminar structure.

6. The conveyor unit according to claim 5, wherein said base (21) has at least one guide member (37) projecting from its top surface, and wherein said support (23) has a through-hole formed therethrough for insertion of said guide member (37).

7. The conveyor unit according to a preceding claim, wherein said raising inlet port (11, 31) is also provided for drawing off fluid to lower said support (2, 23).

## Patentansprüche

1. Fördervorrichtung mit:
einem Vorrichtungskörper (1);
einem oder mehreren Rollbauteillagern (2, 23), welche mit Rollbauteilen (5) versehen sind, wobei jedes Lager (2, 23) gleitend bewegbar in oder an den Vorrichtungskörper (1) montiert ist;
einer Hubeinlaßöffnung (11, 31), durch welche ein Fluid in Zylinderbohrungen (19, 24, 26) einführbar ist, die in dem Vorrichtungskörper (1) zum Heben jedes Lagers (2, 23) vorgesehen sind;
Kolben (18, 22, 27), welche in den Zylinderbohrungen (19; 24, 26) des Vorrichtungskörpers (1) durch das in die Hubeinlaßöffnung (11, 31) eingeführte Fluid anhebbar montiert sind, wobei die Kolben (18, 22, 27) Anformungen (17) besitzen, die an jedes Lager (2, 23) angreifen; gekennzeichnet durch
eine Absenkeinlaßöffnung (15; 33), durch welche ein Fluid zum Absenken eines jeden Lagers (2, 23) einführbar ist.

2. Fördervorrichtung nach Anspruch 1, bei der jedes Lager (2) einen Absenkflansch (2a) aufweist.

3. Fördervorrichtung nach Anspruch 1, bei der jeder Kolben (22), welcher an das Lager (23) angreift, einen Absenkflansch (22a) aufweist.

4. Fördervorrichtung nach Anspruch 3, bei der zwei Kolben (22, 27) vorgesehen sind, wobei der erste Kolben (22) in eine erste Zylinderbohrung (24) zum Anheben und Absenken des Lagers (23) montiert ist, und wobei der zweite Kolben (27) in eine zweite Zylinderbohrung (26) für den zusätzlichen Angriff an den ersten Kolben (22) zu dessen Anheben montiert ist.

5. Fördervorrichtung nach Anspruch 1, 3 oder 4, mit einem Grundteil (21), welches aus einem oberen Deckel (21a), einem Rumpfbauteil (21b) sowie einer Grundplatte (21c) gebildet ist, welche jeweils eine vorbestimmte Länge besitzen und einen plattenförmigen Aufbau bilden.

6. Fördervorrichtung nach Anspruch 5, bei der das Grundteil (21) wenigstens ein Führungsbauteil (37) besitzt, welches von deren oberer Fläche vorsteht, und bei der das Lager (23) eine Durchgangsöffnung aufweist, welche zum Einführen des Führungsbauteiles (37) durchgehend gebildet ist.

7. Fördervorrichtung nach einem der vorangehenden Ansprüche, bei der die Hubeinlaßöffnung (11, 31) auch für das Absaugen des Fluids zum Absenken des Lagers (2, 23) vorgesehen ist.

## Revendications

1. Unité de convoyeur comprenant :
un corps d'unité (1).
un ou plusieurs supports d'organes de roulement (2, 23) pourvus d'organes de roulement (5), chaque support (2, 23) étant monté de façon à coulisser dans ou sur le corps d'unité (1),
un orifice d'entrée de soulèvement (11, 31) par lequel un fluide peut être introduit dans des alésages cylindriques (19, 24, 26) ménagés dans le corps d'unité (1) pour soulever chaque support (2, 23),
des pistons (18, 22, 27) montés dans les alésages cylindriques (19, 24, 26) du corps d'unité (1) de façon à être soulevés par le fluide introduit dans l'orifice d'entrée de soulèvement (11, 31), les pistons (18, 22, 27) comportant des parties en saillie (17) agissant sur chaque support (2,23),
caractérisée par un orifice d'entrée d'abaissement (15, 33) par lequel un fluide peut être introduit pour abaisser chaque support (2, 23).

2. Unité de convoyeur selon la revendication 1, dans laquelle chaque support (2) comporte une collerette d'abaissement (2a).

3. Unité de convoyeur selon la revendication 1, dans laquelle chaque piston (22) agissant sur le support (23) comporte une collerette d'abaissement (22a).

4. Unité de convoyeur selon la revendication 3, dans laquelle il est prévu deux pistons (22, 27), le premier piston (22) étant monté dans un premier alésage cylindrique (24) pour soulever et abaisser le support (23) et le second piston (27) étant monté dans un second alésage cylindrique (26) en vue d'exercer une action supplémentaire sur le premier piston (22) de façon à soulever ce piston.

5. Unité de convoyeur selon la revendication 1, 3 ou 4, comprenant une base (21) formée d'un couvercle supérieur (21a), d'un élément de corps (21b) et d'une plaque inférieure (21c) ayant respectivement une longueur préfixée et formant une structure superposée.

6. Unité de convoyeur selon la revendication 5, dans laquelle la base (21) comporte au moins un élément de guidage (37) faisant saillie vis-à-vis de sa surface supérieure et dans laquelle le support (23) comporte un trou traversant ménagé à travers lui et servant à recevoir l'élément de guidage (37).

7. Unité de convoyeur selon une revendication précédente, dans laquelle l'orifice d'entrée de soulèvement (11, 31) est prévu aussi pour évacuer le fluide afin d'abaisser le support (2, 23).
